# EUROPEAN PATENT SPECIFICATION

(11) **EP 3 419 800 B1**
(45) Date of publication and mention of the grant of the patent: **01.01.2020**
(21) Application number: 17714892.1
(22) Date of filing: 17.02.2017
(51) Int. Cl.: B29B 7/42, B05B 1/26, B05B 7/04

(54) **SPRAYING DEVICE OF MIXTURES OBTAINED FROM THE REACTION OF POLYMER MATERIALS**
SPRITZVORRICHTUNG VON MISCHUNGEN AUS DER REAKTION VON POLYMERMATERIALIEN
DISPOSITIF DE PULVÉRISATION DE MÉLANGES OBTENUS PAR LA RÉACTION DE SUBSTANCES POLYMÈRES

(30) Priority: 22.02.2016 IT UB20160924
(43) Date of publication of application: 02.01.2019
(73) Proprietor: Stemma S.R.L., 31041 Cornuda (TV) (IT)
(72) Inventor: BORDIN, Ettore, 31044 Montebelluna (Treviso) (IT); PELLIZZARI, Stefano, 31044 Montebelluna (Treviso) (IT)
(74) Representative: Marri, Luca
(86) International application number: PCT/IB2017/050898
(87) International publication number: WO 2017/145029

(56) References cited:
- DE-A1-102005 030 023
- FR-A1- 2 018 068
- FR-A1- 2 352 593
- GB-A- 103 488
- GB-A- 2 024 047
- JP-A- S57 165 066

## Description

The present invention relates to a spraying device of mixtures obtained from the reaction of polymer materials.

The traditional methods for producing articles using reactive polymer materials in fluid form, for example bi- or multi-component polyurethanes, use devices in which the polymer materials are mixed thoroughly together by means of a suitably shaped rotary mixer.

Pressurized air is added to the mixing product obtained so as to allow spraying thereof through an end nozzle.

A device of this known type, provided with a vane mixer, is for example described in US 3,035,775.

Another type of spraying mixer is described in EP 2346614, in the name of the same Applicant, wherein the mixer consists of a helical-profile mixing screw. A mixing device is also described in document FR 2018068 A1.

During the spraying step, these devices produce a spray cone or fan. In order to be effective the spray cone must be directed so as to be as far as possible perpendicular to the surface to be coated, such that the surface to be struck is situated opposite it.

In this way, in fact, the spraying material covers in a uniform and homogeneous manner the surface to be coated.

However, the spraying devices may not always be directed perpendicularly relative to the surface to be coated or may not be directed so that the spray cone hits the surface to be coated perpendicularly.

The small size of the moulds and the dimensions of the spraying device may prevent the latter from being correctly directed.

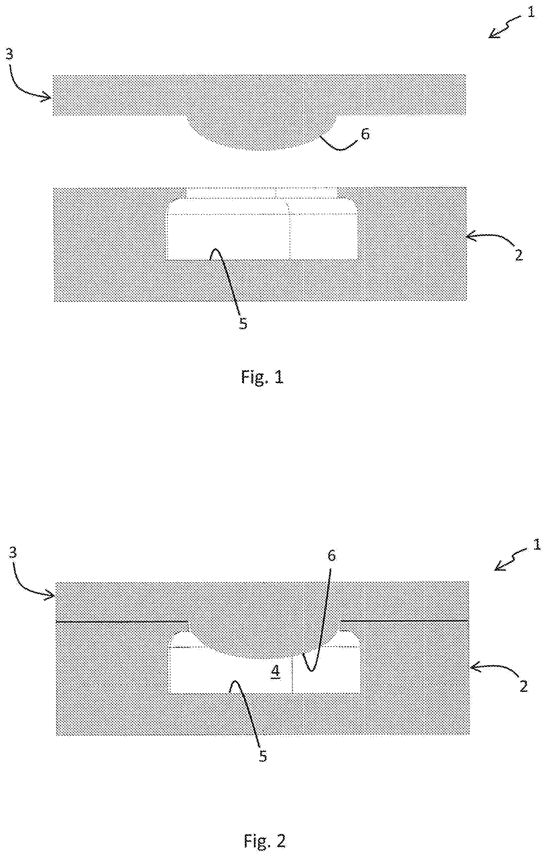

Reference is made firstly to Figures 1-6 which are provided in order to illustrate more clearly the technical problem considered and solved by the present invention.

Figure 1 shows in schematic form a mould of the conventional type intended to be used for the production of articles obtained by means of spraying of polymer mixtures.

The mould 1 is composed of a base 2 and a lid 3. The base 2 and the lid 3, when the mould is closed (see Figure 2), are designed to define a space 4 bounded by a first cavity 5 and a second cavity 6 which are arranged on the base 2 and on the lid 3, respectively.

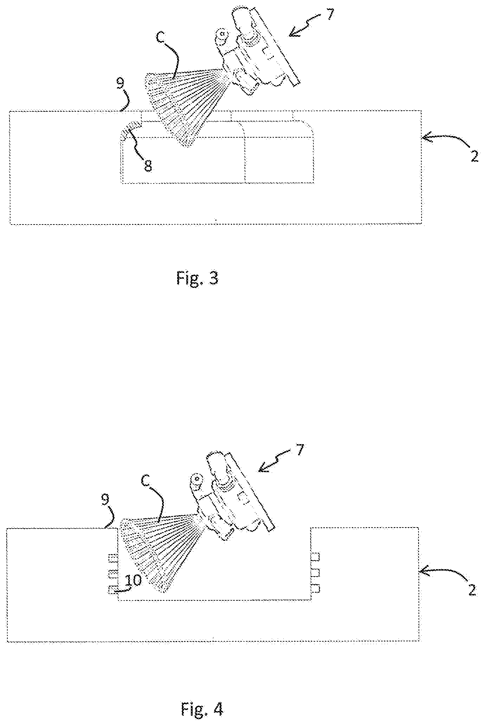

As can be clearly seen in Figures 3 and 4, the spray cone C produced by the spraying device 7 does not manage to strike, with the correct inclination, the undercut surface 8 situated underneath the closing edge 9 of the base 2, where "closing edge" is understood as meaning the surface of the base intended to come into direct contact with the lid, when the mould is closed.

In a similar manner, the spray cone C does not manage to strike, with the correct inclination, also any incisions or grooves 10 provided in the base 2 of the mould. These incisions are in fact "hidden" from the spray cone C.

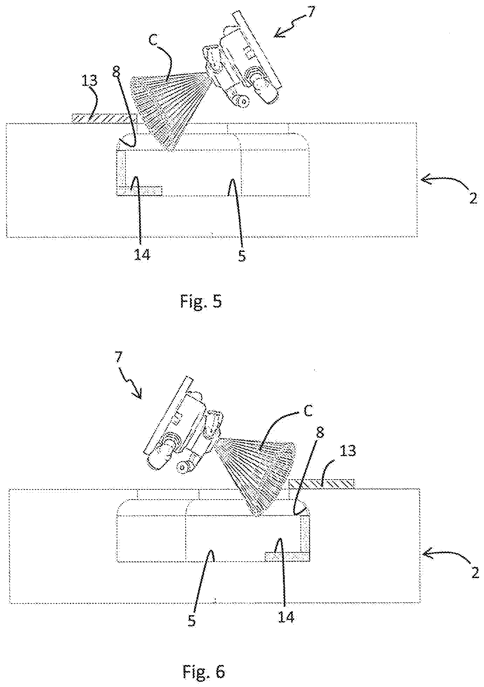

Even when zones adjacent to undercuts with reduced access can be reached by means of the simple inclination of the spraying device, a technical problem occurs, as shown in schematic form in Figures 5 and 6.

The head of the spraying device 7 is inclined and consequently part of the sprayed material C, in addition to being deposited on the portions 14 of the cavity 5, adjacent to the undercut portion 8, covers also the portion 13 along the closing edge 9 of the base.

However, it is clear how in this way there is a considerable wastage of material. The material deposited on the portions 13, in fact, is situated outside the cavity 4 and is not necessary for manufacture of the article.

Moreover, the material sprayed into these zones 13 may hinder correct closure of the mould, since, being situated between base and lid, it could in fact prevent the facing surfaces of the base and the lid from coming correctly into contact with each other.

Finally, it is increasingly common to move the spraying device automatically by means of robot or interpolated-axis systems.

The need to incline the spraying device in order to reach also zones of the mould cavity which otherwise would be impossible to reach requires careful programming of the spraying path patterns. These programming operations are laborious and require a lot of time.

One possible solution is to provide L-shaped extensions to be mounted on the terminal end of the nozzle.

These extensions allows the spray jet to be directed also in directions perpendicular to the longitudinal axis of the spraying device, allowing access to surfaces which are difficult to reach.

These extensions, however, rapidly become clogged.

It is necessary, therefore, to perform suitable washing operations which involve the use of chemical substances intended to be introduced under pressure inside the nozzle and the associated extension.

These washing operations, in addition to having a considerable impact on the environment, since dangerous chemical substances not easily disposed of are used, also result in wastage of material.

In order to ensure that the supply reservoirs of the spraying device are free from any washing residue, a number of "zero-load" spraying cycles must in fact be carried out.

Alternatively, it is possible to clean any processing residue both from the nozzle and from any extension by means of compressed-air blowing operations. In this case, there is no problem with regard to the recovery of chemical substances or the execution of a number of "zero-load" spraying cycles; however, in order to be effective, these blowing operations must be performed at high pressure. The result is that the structure of the spraying device and the machine connected to it is significantly more complex, with greater costs and higher maintenance expenditure.

The object of the present invention therefore is that of overcoming at least partially the drawbacks mentioned above with reference to the prior art.

In particular, a task of the present invention is to provide a spraying device which, while remaining in a vertical or slightly inclined position, is able to direct all or part of the spray cone also into zones which are difficult to reach.

Moreover, a task of the present invention is to provide a spraying device which has a simple structure and which may be easily adjusted according to the working requirements.

Furthermore, a task of the present invention is to provide a spraying device which has excellent performance features and which may be assembled without having to use specialized labour and/or special equipment.

Finally, a task of the present invention is to provide a spraying device which can be easily cleaned, without having to perform washing operations using chemical substances or blowing operations with high-pressure compressed air.

This object and other objects and tasks are achieved with a spraying device according to claim 1.

The characteristic features and further advantages of the invention will become clear from the description, provided hereinbelow, of a number of examples of embodiment, provided by way of a non-limiting example, with reference to the accompanying drawings in which:
- Figure 1 shows in schematic form a cross-sectional view of a mould of the known type in an open configuration;
- Figure 2 is a view similar to that of Figure 1, in which the mould is in the closed configuration;
- Figures 3-6 illustrate in schematic form spraying operations performed using known spraying devices;
- Figure 7 shows in schematic form a three-dimensional and partially sectioned view of a spraying device according to the invention;
- Figure 8 shows a front view, on a larger scale, of the detail of Figure 7 indicated by A;
- Figure 9 is a view similar to that of Figure 8 and showing in schematic form the pattern of the spray cone which can be obtained with the spraying device according to the invention;
- Figure 10 shows in schematic form a spraying operation performed using the device according to the invention;
- Figure 11 shows in schematic form a longitudinally sectioned view of the detail shown in Figure 8;
- Figure 12 shows a view, similar to that of Figure 11, but relating to a different embodiment;
- Figures 13-16 show schematic views of alternative embodiments of a part of the spraying device according to the invention;
- Figures 17-20 show schematic views of different embodiments of a detail of the spraying device according to the invention, viewed along the plane indicated by F in Figure 11.

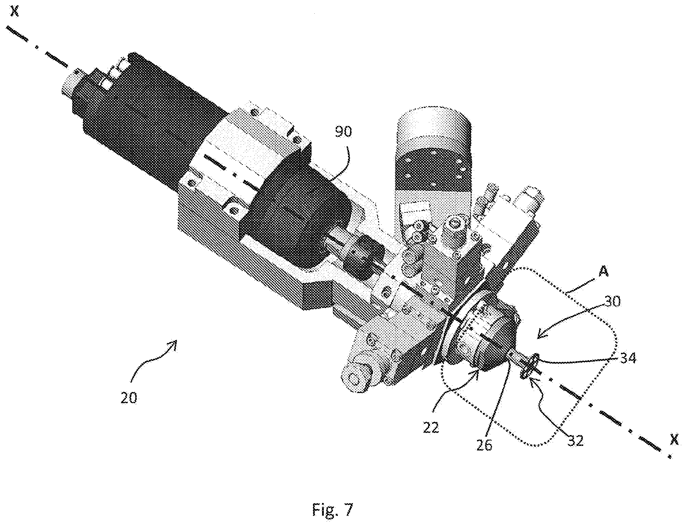

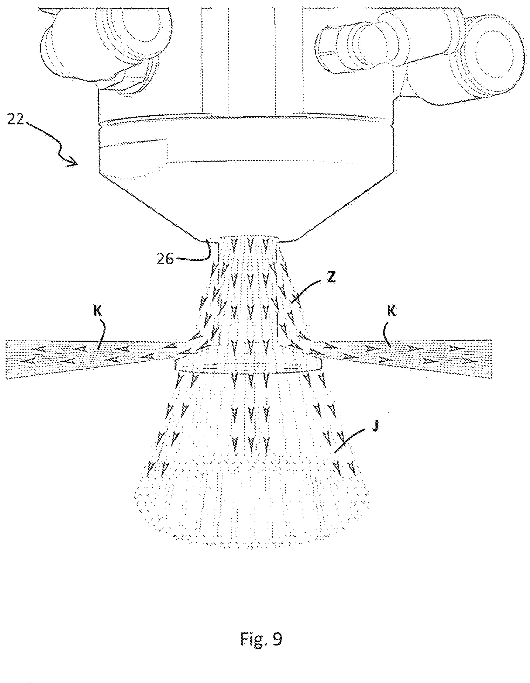

With reference to the attached Figures 7-20, a spraying device manufactured in accordance with the principles of the present invention is indicated in its entirety by the reference number 20.

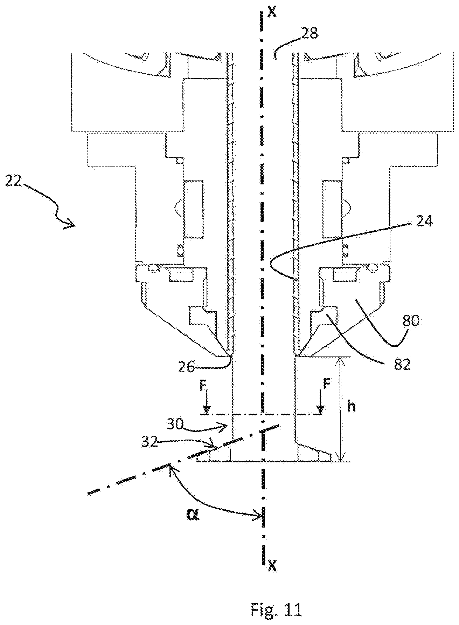

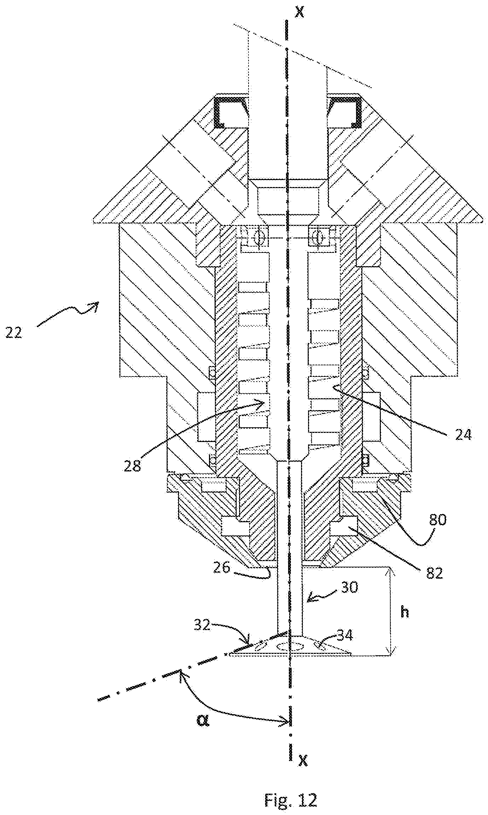

The spraying device 20 comprises a casing 22, preferably with an elongated form, which encloses at least one mixing chamber 24 (see Figures 11 and 12).

The casing 22 is provided, at one of it ends, with a nozzle 26.

A mixer 28 extends inside the mixing chamber 24, along a longitudinal axis X of said mixing chamber 24.

At least two reactive polymer components may be introduced inside said mixing chamber 24, via entry passages which are in communication with respective storage tanks (not shown in the Figures).

The mixer 28 is designed to rotate about the longitudinal axis X so as to mix together said reactive polymer components in order to obtain a polymer mixture. The mixer 28 is preferably operated by drive means 90 of the known type.

The polymer components mixed inside the chamber 24 may be for example chosen from the group of polyols and isocyanates, to which additives are optionally added, so as to obtain a compact or expanded polyurethane mixture.

The polymer mixture obtained is intended to be sprayed through the nozzle 26 in the form of a spray cone Z.

In a known manner, in fact, the polymer mixture is atomized by means of localized introduction of air in the vicinity of the nozzle 26.

As shown in Figures 11 and 12, the introduction of air into the polymer mixture may be performed, in a known manner, via radial openings 82 provided in the circular rim 80 positioned at the end part of the casing 22.

In accordance with the invention the mixer 28 is provided with an appendix 30 which protrudes, at least partially, out from the casing 22 through the nozzle 26.

The appendix 30, as clearly shown in Figures 7, 8, 11 and 12, is provided with a deviation surface 32 which is inclined at a deviation angle α relative to the longitudinal surface X of the mixing chamber. As can be seen in the attached figures, the deviation angle α is defined between the longitudinal axis X and a half-line lying on the deviation surface 32.

This deviation angle α may be between 30° and 90°, preferably between 50° and 90° and even more preferably between 70° and 90°.

Advantageously the provision of the deviation surface 32 in the vicinity of the nozzle 26 allows at least a first portion K of the spray cone Z, sprayed through the nozzle 26, to be intercepted and deviated.

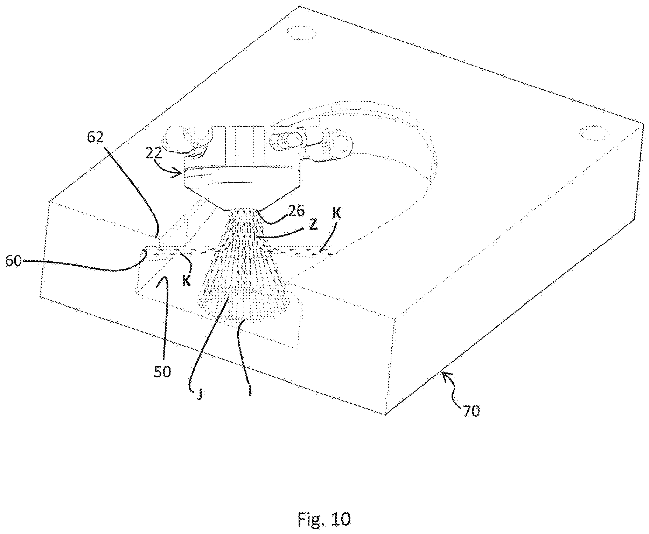

As for example shown in Figure 10, the provision of the deviation surface 32 advantageously allows part of the spray cone Z to be deviated towards the side surfaces of a mould cavity 50, without the need to incline the spraying device 20.

The portion K of the spray cone Z deviated by the deviation surface 32 may for example be directed towards the undercut surfaces 60 positioned in the vicinity of the closing edge 62 of the base 70 of the mould (see Figure 10).

Advantageously, the portion K of the spray cone Z deviated by the deviation surface 32 may also be directed towards incisions or grooves provided in the side surface of the mould cavity, keeping the spraying device in a vertical position or in any case inclined at an angle of inclination smaller than that shown in schematic form in Figures 3-6.

In fact, as clearly shown in Figure 10, the portion K of the deviated spray cone may be directed towards the surfaces to be sprayed, without this resulting in spraying also of the surface 62 in the vicinity of the closing edge of the base 70 of the mould.

Advantageously, the appendix 30 is rigidly connected to the mixer 28 so as to be able to rotate at the same speed of rotation as the mixer 28.

Thus the particles of the sprayed mixture which strike the deviation surface 32, in addition to being deviated from their trajectory, may also receive a thrust while they are separated from the deviation surface 32, owing to the centrifugal force which is generated by the rotation of the surface which is struck.

Moreover, owing to the centrifugal force acting on the deviation surface, this surface remains free from any residue once spraying of the polymer mixture has stopped. It is therefore not necessary to clean the appendix 30 and the associated deviation surface 32 at the end of the spraying operation.

Advantageously, the appendix 30 may be fixed to the mixer via releasable fixing means, for example snap-engaging means. Alternatively, an end part of the appendix 30 may be hollow and provided with a female thread designed to be screwed onto the terminal end of the mixer 28. Alternative releasable fixing means may be provided in order to satisfy specific needs.

The possibility of replacing easily the appendix 30 fixed to the mixer 28 allows deviation surfaces 32 with different configurations and inclinations to be used and therefore allows, depending on the uses and the needs, the quantity and the inclination of the portion K of the deviated spray cone to be varied.

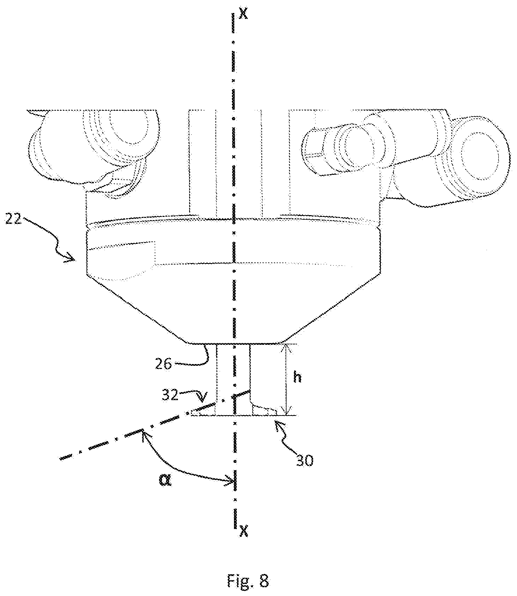

The deviation surface 32 may be positioned at a distance h from the nozzle 26. This distance, which is schematically shown in Figures 8, 11 and 12, corresponds to the distance from the nozzle 26 of the outermost portion of the deviation surface.

Preferably, the distance h is comprised between 15 mm and 100 mm, even more preferably between 20 mm and 50 mm.

Advantageously, owing to the possibility of replacing easily the appendix 30 fixed to the mixer, the distance h may be varied.

Advantageously, the deviation surface 32 may be situated at a greater distance from the nozzle if the mixture must be sprayed into mould cavities 50 which are deep or if any grooves or incisions to be filled are situated close to the bottom surface of the mould base.

Moreover, owing to its simplified configuration, the appendix 30 may be advantageously fixed both to mixers of the known type with vanes (see Figure 12) or to helical-profile screw mixers (see Figure 11). As already mentioned, an example of a helical-profile screw mixer is described in EP 2346614 in the name of the same Applicant.

By using this mixing screw it is possible to obtain articles with small thicknesses and without the defects which are commonly encountered in the articles produced with polyurethane mixtures, such as air pockets or cavities.

Advantageously, as shown in the attached figures, the deviation surface 32 may define at least one or more through-openings 34 through which at least one second portion J of the spray zone Z may pass, without being deviated by the deviation surface 32.

In other words, part of the spray cone Z sprayed through the nozzle 26, despite the presence of the appendix 30 and the associated deviation surface 32, may continue along its original trajectory through the apertures 34, thus striking the surface I of the mould cavity 50 facing the nozzle.

Therefore, despite the presence of the deviation surface 32, it is possible to coat uniformly and homogenously also the surface arranged facing the nozzle 26, in a similar manner to that performed using the conventional spraying devices.

Preferably, the openings 34 have a circular form and are positioned equidistant from each other.

The dimensions and the number of openings 34 are chosen on the basis of the portion of the spray cone J which must pass through the deviation surface 32 without being intercepted by the latter. This portion will depend on the area of the surfaces 60 of the cavity 50 which are in an undercut position and which, in order to be sprayed, must be reached by the portion of the deviated spray cone K; likewise it will depend on the dimensions of the mould cavity 50 which is situated facing the nozzle 26.

As shown in the attached figures, the deviation surface 32 is preferably provided at the terminal end of the appendix 30, the expression "terminal end" being understood as meaning the end of the appendix which is relatively further from the mixer 28.

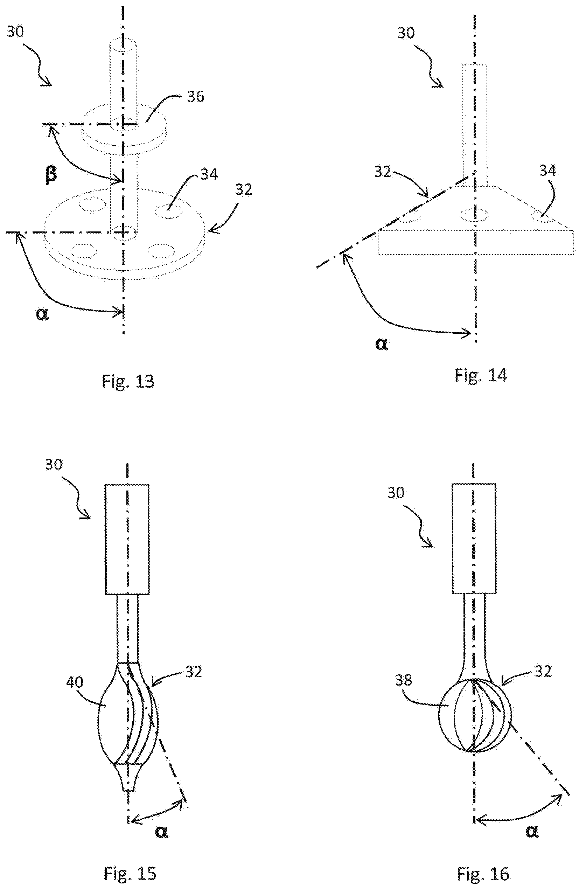

With reference for example to Figure 13, in accordance with a first embodiment, the deviation surface 32 may consist of a flat surface with a circular shape. Alternatively, the deviation surface may consist of a flat surface with a polygonal, for example square or pentagonal form. In a further embodiment the deviation surface may consist of a circular sector.

In these embodiments the deviation surface lies preferably in a plane arranged perpendicularly relative to the longitudinal axis X.

Alternatively, as for example shown in Figures 8, 11, 12 and 14, the deviation surface 32 may consist of the side surface of a conical shaped solid. In such a case, the vertex of the conical solid is arranged facing the nozzle 26 and preferably lies on the longitudinal axis X.

In accordance with a further embodiment, the deviation surface 32 may consist of the bottom face of a cylindrical shaped solid provided at the terminal end of the appendix 30.

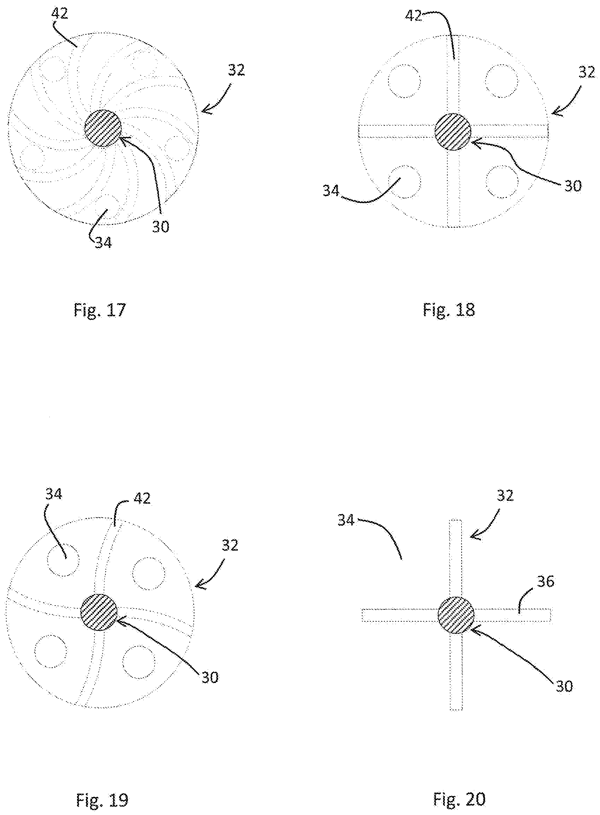

As shown in Figure 20, according to an alternative embodiment, the deviation surface 32 consists of at least of one vane 36 which extends radially from the appendix 30. Preferably, in this embodiment, the deviation surface 32 is defined by four radial vanes which are equidistant from each other and may be inclined. The openings 34 in this embodiment will be defined by the spaces included between the vanes 36.

Further embodiments for the deviation surface 32 are shown in Figures 15 and 16.

In accordance with these embodiments, the deviation surface 32 consists of one or more grooves arranged along the outer surface of a spherical shaped body 38 (see Figure 16) or of a body with an elongated form 40 (see Figure 15) which are arranged preferably at the terminal end of the appendix 30.

The deviation angle α will be defined between the longitudinal axis X and the half-line, tangential to these grooves, which passes through the top vertex of the spherical shaped body or the elongated body.

In this case also the openings 34 will be defined between the spaces present between the various grooves 32.

With reference to Figure 13, the appendix 30 may advantageously be provided with a second deviation surface 36. This surface 36 may be inclined at an angle of inclination β relative to the longitudinal axis X.

This angle β may vary within the same ranges as the angle of inclination α of the first deviation surface 32.

Preferably the angle of inclination β of the second deviation surface 36 is the same as the angle of inclination α of the first deviation surface 32. With reference to Figure 13, these angles may be equal to 90°.

In a manner similar to that of the first deviation surface 32, the function performed by the second deviation surface 36 is to deviate at least one third portion of the spray cone sprayed through the nozzle 26.

Preferably, the second deviation surface 36 is provided in a raised position with respect to the first deviation surface 32, raised position being understood as meaning that it is arranged in a position relatively closer to the nozzle.

The second deviation surface 36 may also be provided with through-openings through which part of the spray cone Z may pass without being deviated, so as to continue along its path towards the first deviation surface 32 and, in some cases, if not intercepted by the latter, towards the mould cavity 50.

The second deviation surface 36 is particularly advantageous in the case where the mould cavity has surfaces which are undercut or difficult to reach, being located at different heights along the cavity 50.

Preferably, the second deviation surface 36 consists of a circular disc or the side surface of a conical shaped solid.

Alternative embodiments for the second deviation surface 36 may be provided in order to satisfy specific requirements.

With reference now to Figures 17-19, advantageously the deviation surface 32 may be provided on the face directed towards the nozzle 26 with raised ribs 42 which extend in the radial direction along a radially extending line.

These ribs 42 may vary in number and may have different profiles and have the function of facilitating the deviation of the portion K of the spray cone by the deviation surface.

At this point it is clear how the predefined objects have been achieved.

By means of the spraying device of the present invention it is possible to create a deviated spray cone which coats any undercuts or zones of the mould which are difficult to reach.

The spraying device according to the present invention may operate in the vertical position or in any case with angles of inclination which are smaller than those of the known spraying devices. In this way programming of the spraying path patterns is facilitated.

The spraying device according to the present invention allows the quantity of material, which is deposited on the closing edge of the mould, to be reduced significantly.

On the one hand there is less wastage of material and on the other hand there is less risk that closing of the base with the mould lid may be hindered.

The appendix and the deviation surface are self-cleaning devices since they rotate at the same speed as the mixing screw and do not interfere with any cleaning systems designed to remove any processing residue from the nozzle.

Finally, a same spraying device may be provided with a plurality of appendixes so as to be able to vary easily the inclination and quantity of the portion of the spray cone which is deviated.

Finally it will also be clear to the person skilled in the art how the appendix 30 and the associated deviation surface 32 represent a simple and low-cost solution.

The person skilled in the art, in order to satisfy specific requirements, may make modifications to the embodiments of the spraying device described above and/or replace the parts described with equivalent parts, without thereby departing from the scope of the accompanying claims.

## Claims

1. Spraying device (20) for mixtures obtained from the reaction of polymer materials, comprising:
- a casing (22) which encloses at least one mixing chamber (24) and which is provided at one of its ends with a nozzle (26);
- a mixer (28) which extends at least partially inside the mixing chamber (24) along a longitudinal axis (X) of said mixing chamber (24) and which is designed to rotate about said longitudinal axis (X); the mixer (28) being intended to mix together at least two reactive polymer components introduced inside the mixing chamber (24) so as to obtain a polymer mixture; said polymer mixture being suitable for being sprayed through the nozzle (26) in the form of a spray cone (Z),
**characterized in that**
the mixer (28) is provided with an appendix (30) which protrudes, at least partially, from the casing (22) through the nozzle (26); said appendix (30) being provided with a deviation surface (32), on the outside of the nozzle (26), which is inclined at an angle of deviation (α) relative to the longitudinal axis (X) and which is intended to intercept and to deviate at least a first portion (K) of the spray cone (Z) sprayed through the nozzle (26).

2. Spraying device (20) according to claim 1, **characterized in that** said deviation surface (32) defines at least one opening (34) through which at least a second portion (J) of the spray cone (Z), sprayed through the nozzle (26), passes without being deviated by the deviation surface (32).

3. Spraying device (20) according to claim 1, **characterized in that** the deviation surface (32) is arranged at the terminal end of the appendix (30).

4. Spraying device (20) according to claim 1, **characterized in that** the appendix (30) is provided with a second deviation surface (36) which is inclined at an angle of deviation (β) relative to the longitudinal axis (X) and is intended to intercept and to deviate at least a third portion of the spray cone (Z) sprayed through the nozzle (26).

5. Spraying device (20) according to claim 4, **characterized in that** the second deviation surface (36) is arranged in a raised position relative to the first deviation surface (32).

6. Spraying device (20) according to claim 1, **characterized in that** the deviation surface (32) is inclined at an angle of inclination (α) of between 30° and 90°, preferably between 50° and 90°, even more preferably between 70° and 90°.

7. Spraying device (20) according to claim 1, **characterized in that** the deviation surface (32) is a flat surface with a circular or polygonal shape, the deviation surface (32) lying in a plane perpendicular to the longitudinal axis (X).

8. Spraying device (20) according to claim 1, **characterized in that** the deviation surface (32) consists of a top face of a cylindrical shaped solid or a side surface of a conical shaped solid; said cylindrical or conical shaped solid being arranged at the terminal end of the appendix (30).

9. Spraying device (20) according to claim 1, **characterized in that** the deviation surface (32) consists of at least one vane (36) which extends radially from the appendix (30).

10. Spraying device (20) according to claim 1, **characterized in that** the deviation surface (32) consists of one or more longitudinal grooves provided on the outer surface of a spherical shaped body (38) or elongated body (40) fixed to the appendix (30).

11. Spraying device (20) according to claim 1, **characterized in that** the appendix (30) is fixed to the mixer (28) via releasable fixing means.

12. Spraying device (20) according to claim 1, **characterized in that** the deviation surface (32) is provided on the face directed towards the nozzle (26) with raised ribs (42) which extend in a radial direction along a radially extending line.

13. Spraying device (20) according to claim 1, **characterized in that** the deviation surface (32) is situated at a distance (h) from the nozzle (26); said distance (h) being comprised between 15 mm and 100 mm, preferably between 20 mm and 50 mm.

## Patentansprüche

1. Sprühvorrichtung (20) für aus der Reaktion von Polymermaterialien erhaltenen Mischungen, umfassend:
- ein Gehäuse (22), welches zumindest eine Mischkammer (27) umschließt und welches an einem seiner Enden mit einer Düse (26) versehen ist;
- ein Mischer (28), welcher sich zumindest teilweise innerhalb der Mischkammer (24) entlang einer Längsachse (X) der Mischkammer (24) erstreckt und welcher ausgebildet ist, sich um die Längsachse (X) zu drehen; wobei der Mischer (28) bestimmt ist, zumindest zwei in das Innere der Mischkammer (24) eingebrachte reaktive Polymerbestandteile zusammenzumischen, um eine Polymermischung zu erhalten; wobei die Polymermischung geeignet ist, durch die Düse (26) in Form eines Sprühkegels (Z) gesprüht zu werden,
**dadurch gekennzeichnet, dass**
der Mischer (28) mit einem Fortsatz (30) ausgestattet ist, welcher zumindest teilweise aus dem Gehäuse (22) durch die Düse (26) herausragt; wobei der Fortsatz (30) an der Außenseite der Düse (26) mit einer Ablenkungsfläche (32) versehen ist, welche in einem Ablenkungswinkel (α) bezüglich der Längsachse (X) geneigt ist und welche bestimmt ist, zumindest einen ersten Abschnitt (K) des durch die Düse (26) gesprühten Sprühkegels (Z) zu schneiden und abzulenken.

2. Sprühvorrichtung (20) gemäß Anspruch 1, **dadurch gekennzeichnet, dass** die Ablenkungsfläche (32) zumindest eine Öffnung (34) festlegt, durch welche zumindest ein zweiter Abschnitt (J) des durch die Düse (26) gesprühten Sprühkegels (Z) hindurchtritt, ohne von der Ablenkungsfläche (32) abgelenkt zu sein.

3. Sprühvorrichtung (20) gemäß Anspruch 1, **dadurch gekennzeichnet, dass** die Ablenkungsfläche (32) am Endteil des Fortsatzes (30) angeordnet ist.

4. Sprühvorrichtung (20) gemäß Anspruch 1, **dadurch gekennzeichnet, dass** der Fortsatz (30) mit einer zweiten Ablenkungsfläche (36) ausgestattet ist, welche in einem Ablenkungswinkel (β) bezüglich der Längsachse (X) geneigt ist und welche bestimmt ist, zumindest einen dritten Abschnitt des durch die Düse (26) gesprühten Sprühkegels (Z) zu schneiden und abzulenken.

5. Sprühvorrichtung (20) gemäß Anspruch 4, **dadurch gekennzeichnet, dass** die zweite Ablenkungsfläche (36) bezüglich der ersten Ablenkungsfläche (32) in einer erhöhten Stellung angeordnet ist.

6. Sprühvorrichtung (20) gemäß Anspruch 1, **dadurch gekennzeichnet, dass** die Ablenkungsfläche (32) in einem Ablenkungswinkel (α) zwischen 30° und 90°, bevorzugt zwischen 50° und 90°, mehr bevorzugt zwischen 70° und 90° geneigt ist.

7. Sprühvorrichtung (20) gemäß Anspruch 1, **dadurch gekennzeichnet, dass** die Ablenkungsfläche (32) eine flache Oberfläche mit einer runden oder mehreckigen Form ist, wobei die Ablenkungsfläche (32) in einer zu der Längsachse (X) senkrechten Ebene liegt.

8. Sprühvorrichtung (20) gemäß Anspruch 1, **dadurch gekennzeichnet, dass** die Ablenkungsfläche (32) aus einer Deckfläche eines zylindrisch geformten Körpers oder einer Seitenfläche eines konisch geformten Körpers besteht; wobei der zylindrisch oder konisch geformte Körper am Endteil des Fortsatzes (30) angeordnet ist.

9. Sprühvorrichtung (20) gemäß Anspruch 1, **dadurch gekennzeichnet, dass** die Ablenkungsfläche (32) aus zumindest einer Platte (36) besteht, die sich ausgehend vom Fortsatz (30) radial erstreckt.

10. Sprühvorrichtung (20) gemäß Anspruch 1, **dadurch gekennzeichnet, dass** die Ablenkungsfläche (32) aus einer oder mehreren an der äußeren Oberfläche eines am Fortsatz (30) befestigten kugelig geformten oder länglichen Körpers (38) vorgesehenen Längsvertiefungen besteht.

11. Sprühvorrichtung (20) gemäß Anspruch 1, **dadurch gekennzeichnet, dass** der Fortsatz (30) am Mischer (28) mit lösbaren Befestigungsmitteln befestigt ist.

12. Sprühvorrichtung (20) gemäß Anspruch 1, **dadurch gekennzeichnet, dass** die Ablenkungsfläche (32) auf der in Richtung der Düse (26) weisenden Seite mit erhöhten Rippen (42), die sich in einer radialen Richtung entlang einer sich radial erstreckenden Linie erstrecken, vorgesehen ist.

13. Sprühvorrichtung (20) gemäß Anspruch 1, **dadurch gekennzeichnet, dass** die Ablenkungsfläche (32) sich in einem Abstand (h) von der Düse (26) befindet; wobei der Abstand (h) zwischen 15 mm und 100 mm liegt, bevorzugt zwischen 20 mm und 50 mm.

## Revendications

1. Dispositif de pulvérisation (20) pour mélanges obtenus à partir de la réaction de matériaux polymères, comprenant :
un carter (22) qui enferme au moins une chambre de mélange (24) et qui est prévu au niveau de l'une de ces extrémités avec une buse (26) ;
un mélangeur (28) qui s'étend au moins partiellement à l'intérieur de la chambre de mélange (24) le long d'un axe longitudinal (X) de ladite chambre de mélange (24) et qui est conçu pour tourner autour dudit axe longitudinal (X) ; le mélangeur (28) étant prévu pour mélanger au moins deux composants polymères réactifs introduits à l'intérieur de la chambre de mélange (24) afin d'obtenir un mélange de polymères ; ledit mélange de polymères étant approprié pour être pulvérisé par la buse (26) sous la forme d'un cône de pulvérisation (Z),
**caractérisé en ce que** :
le mélangeur (28) est prévu avec un appendice (30) qui fait saillie, au moins partiellement, du carter (22) par la buse (26) ; ledit appendice (30) étant prévu avec une surface de déviation (32) à l'extérieur de la buse (26), qui est inclinée à un angle de déviation (α) par rapport à l'axe longitudinal (X) et qui est prévue pour intercepter et dévier au moins une première partie (K) du cône de pulvérisation (Z) pulvérisé par la buse (26).

2. Dispositif de pulvérisation (20) selon la revendication 1, **caractérisé en ce que** ladite surface de déviation (32) définit au moins une ouverture (34) à travers laquelle au moins une deuxième partie (J) du cône de pulvérisation (Z), pulvérisée par la buse (26), passe sans être déviée par la surface de déviation (32).

3. Dispositif de pulvérisation (20) selon la revendication 1, **caractérisé en ce que** la surface de déviation (32) est agencée au niveau de l'extrémité terminale de l'appendice (30).

4. Dispositif de pulvérisation (20) selon la revendication 1, **caractérisé en ce que** l'appendice (30) est prévu avec une seconde surface de déviation (36) qui est inclinée à un angle de déviation (β) par rapport à l'axe longitudinal (X) et est prévue pour intercepter et dévier au moins une troisième partie du cône de pulvérisation (Z) pulvérisée par la buse (26).

5. Dispositif de pulvérisation (20) selon la revendication 4, **caractérisé en ce que** la seconde surface de déviation (36) est agencée dans une position levée par rapport à la première surface de déviation (32).

6. Dispositif de pulvérisation (20) selon la revendication 1, **caractérisé en ce que** la surface de déviation (32) est inclinée à un angle d'inclinaison (α) compris entre 30° et 90°, de préférence entre 50° et 90°, encore de préférence compris entre 70° et 90°.

7. Dispositif de pulvérisation (20) selon la revendication 1, **caractérisé en ce que** la surface de déviation (32) est une surface plate avec une forme circulaire ou polygonale, la surface de déviation (32) étant dans un plan perpendiculaire à l'axe longitudinal (X).

8. Dispositif de pulvérisation (20) selon la revendication 1, **caractérisé en ce que** la surface de déviation (32) se compose d'une face supérieure d'un solide de forme cylindrique ou d'une surface latérale d'un solide de forme conique ; ledit solide de forme cylindrique ou conique étant agencé au niveau de l'extrémité terminale de l'appendice (30).

9. Dispositif de pulvérisation (20) selon la revendication 1, **caractérisé en ce que** la surface de déviation (32) se compose d'au moins une pale (36) qui s'étend radialement à partir de l'appendice (30).

10. Dispositif de pulvérisation (20) selon la revendication 1, **caractérisé en ce que** la surface de déviation (32) se compose d'une ou de plusieurs rainures longitudinales prévues sur la surface externe d'un corps de forme sphérique (38) ou d'un corps allongé (40) fixé à l'appendice (30).

11. Dispositif de pulvérisation (20) selon la revendication 1, **caractérisé en ce que** l'appendice (30) est fixé au mélangeur (28) via des moyens de fixation amovibles.

12. Dispositif de pulvérisation (20) selon la revendication 1, **caractérisé en ce que** la surface de déviation (32) est prévue sur la face dirigée vers la buse (26) avec des nervures relevées (42) qui s'étendent dans une direction radiale le long d'une ligne s'étendant de manière radiale.

13. Dispositif de pulvérisation (20) selon la revendication 1, **caractérisé en ce que** la surface de déviation (32) est située à une distance (h) par rapport à la buse (26) ; ladite distance (h) étant comprise 15 mm et 100 mm, de préférence entre 20 mm et 50 mm.
